**Europäisches Patentamt**

**European Patent Office**

**Office européen des brevets**

(19)

(11) Veröffentlichungsnummer: **0 183 156**
**B1**

(12) # EUROPÄISCHE PATENTSCHRIFT

(45) Veröffentlichungstag der Patentschrift:
25.01.89

(21) Anmeldenummer: **85114592.0**

(22) Anmeldetag: **16.11.85**

(51) Int. Cl.⁴: **F 23 N 1/02**, G 01 L 15/00,
F 16 F 1/12

(54) **Gas/Luft-Verbundregler.**

(30) Priorität: **29.11.84 DE 3443532**

(43) Veröffentlichungstag der Anmeldung:
**04.06.86 Patentblatt 86/23**

(45) Bekanntmachung des Hinweises auf die Patenterteilung:
**25.01.89 Patentblatt 89/4**

(84) Benannte Vertragsstaaten:
**AT BE CH FR GB IT LI NL SE**

(56) Entgegenhaltungen:
FR-A-2 264 319
US-A-4 457 694

(73) Patentinhaber: **Karl Dungs GmbH & Co., D-7067**
**Urbach (DE)**

(72) Erfinder: **Dungs, Karl, Künkelinstrasse 52, D-7060**
**Schorndorf (DE)**
Erfinder: **Schmid, Hermann, Gerundweg 10, D-7067**
**Urbach (DE)**

(74) Vertreter: **Patentanwälte Kohler - Schwindling -**
**Späth, Hohentwielstrasse 41, D-7000 Stuttgart 1**
**(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 183 156 B1

## Beschreibung

Die Erfindung betrifft einen Gas/Luft-Verbundregler mit zwei Membran-Druckmessern, deren gegeneinander sowie gegen die Kraft einer Feder, die sich an einem in Wirkungsrichtung der Feder verstellbaren Widerlager abstützt, wirkende Membranen über ein Verhältnis-Einstellwerk mechanisch miteinander sowie mit dem Stößel eines Ventiles verbunden sind.

Der grundsätzliche Aufbau von Gas/Luft-Verbundreglern ist beispielsweise aus der DE-PS-2 412 720 bekannt. Sie dienen zur Regelung der Gas- und Luftzufuhr zu Gasfeuerungsanlagen, und zwar gewöhnlich in der Weise, daß das Ventil die Stärke des Gasstromes in Abhängigkeit von dem Druck der der Gasfeuerung zugeführten Luft steuert. Dem von der Luft auf die Membran des einen Druckmessers ausgeübten Druck wirkt der auf die Membran des anderen Druckmessers ausgeübte Gasdruck entgegen, so daß entsprechend dem am Verhältnis-Einstellwerk eingestellten Verhältnis eine resultierende Kraft entsteht, welche das den Gasstrom steuernde Ventil gegen die Kraft einer Feder mehr oder weniger weit öffnet.

Die Menge des der Gasfeuerung zugeführten Gas/Luft-Gemisches hängt von der augenblicklich geforderten Heizleistung ab. Diese Heizleistung kann in großen Bereichen schwanken. Dabei soll das Gas/Luft-Verhältnis von dem gewünschten Wert im gesamten Leistungsbereich so wenig wie möglich abweichen, was bedeutet, daß die für das Gas/Luft-Verhältnis charakteristische Gerade durch den Nullpunkt des Diagrammes gehen muß, auf dessen Achsen der Gas-bzw. Luftdruck aufgetragen ist. Voraussetzung hierfür ist eine solche Einstellung der Federkraft, daß das Gasventil genau in dem Augenblick geschlossen wird, in dem der Luftdruck null wird. Die Steigung der Kurve wird durch das Übersetzungsverhältnis des Verhältnis-Einstellwerkes in Bezug auf die Federkonstante bestimmt. Die Verstellung der die Membranen und das Verhältnis-Einstellwerk belastenden Feder sowie die Einstellung des Verhältnis-Einstellwerkes geben demnach die Möglichkeit, eine durch den Nullpunkt gehende Kennlinie mit in weiten Grenzen beliebigem Anstieg zu realisieren.

Der Einstellung der Federkraft kommt dabei eine erhebliche Bedeutung zu, zumal die erforderliche Federkraft von dem am Verhältnis-Einstellwerk eingestellten Übersetzungsverhältnis abhängt. Eine Veränderung des Übersetzungs-Verhältnisses bedingt daher auch eine Veränderung der Federkraft, und es ist eine besonders sorgfältige Einstellung der Federkraft erforderlich, wenn das Verhältnis-Einstellwerk drei über verschiebbare Widerlager miteinander gekoppelte Hebel aufweist, wie es in unserer gleichrangigen Patentanmeldung P 3 443 533.6 mit dem Titel "Gasfeuerungsanlage mit einem Gas/Luft-Verbundregler" beschrieben ist.

Es ist schon bekannt, bei Gas/Luft-Verbundreglern mittels Schrauben in Richtung der Federachse verstellbare Widerlager für Schraubenfedern vorzusehen. Eine Verstellung solcher Widerlager ist jedoch nicht leicht zu realisieren, da Gas/Luft-Verbundregler ohnehin in ihrer auf die Membranen und das Ventil bezogenen Achsrichtung eine große Baulänge haben, welche durch die Anbringung von Verstelleinrichtungen für Schraubenfedern noch erheblich vergrößert würde. Weiterhin steht häufig oberhalb und unterhalb solcher Gas/Luft-Verbundregler nur wenig Platz zur Verfügung, so daß es schwierig ist, nach der Installation solcher Verbundregler die Einstellarbeiten vorzunehmen, die jedoch nur in diesem Zustand bei laufender Feuerungsanlage vernünftig vorgenommen werden können.

Der Erfindung liegt daher die Aufgabe zugrunde, einen Gas/Luft-Verbundregler der eingangs genannten Art so weiterzubilden, daß seine Einrichtung zur Verstellung der Federkraft einen geringen Platzbedarf aufweist, zum Einstellen gut zugänglich ist und darüber hinaus auch noch eine sehr feine Einstellung bei hoher Stabilität der eingestellten Lage ermöglicht.

Diese Aufgabe wird nach der Erfindung dadurch gelöst, daß das Widerlager an der Schrägfläche eines Justierkeiles anliegt, der mittels einer Verstelleinrichtung quer zur Verstellrichtung des Widerlagers verschiebbar ist.

Die Verwendung eines quer zur Verstellrichtung des Widerlagers verschiebbaren Justierkeiles hat den Vorteil, daß auch die Verstelleinrichtung für den Justierkeil seitlich zur Achse der Membranen, des Verhältnis-Einstellwerkes und des Ventilstößels angeordnet sein kann, wo sie immer gut zugänglich ist. Weiterhin gewährleistet die Anwendung eines Justierkeiles eine sehr feinfühlige Einstellung, weil die durch die Keilfläche bewirkte Hubbewegung sehr klein ist im Verhältnis zur Verschiebebewegung des Justierkeiles. Eine besonders hohe Stabilität wird erzielt, wenn das Widerlager mit einer der Schrägfläche des Justierkeiles angepaßten Schrägfläche am Justierkeil anliegt. Dann könnte sogar dafür Sorge getragen werden, daß die aneinander liegenden Schrägflächen eine ausreichend geringe Steigung haben, um eine Selbsthemmung zu bewirken. Hierdurch würde jede Tendenz zu einer selbständigen Verstellung der eingestellten Federkraft ausgeschlossen.

Bei einer bevorzugten Ausführungsform der Erfindung ist der Justierkeil U-förmig ausgebildet und es sitzt das Widerlager mit Randabschnitten auf den keilförmigen Schenkeln des Justierkeiles auf. Diese Ausbildung des Justierkeiles ist besonders raumsparend und dann besonders günstig, wenn das Widerlager einen sich an einer Membran abstützenden Stößel, insbesondere den Ventilstößel, ringförmig umgibt. Ein solches Widerlager könnte auf einem den Stößel umgebenden, rohrförmigen Gehäuseansatz verschiebbar gelagert sein, wodurch auf einfache Weise eine einwandfreie Führung gegen eine Verschiebung in der Verstellrichtung des Justierkeiles gewährleistet ist.

Die Verstelleinrichtung kann einfach eine axial unverschiebbar gelagerte Stellschraube sein, die in eine Gewindebohrung des Justierkeiles eingreift und insbesondere, wenn der Justierkeil U-förmig ausgebildet ist, eine Gewindebohrung in dessen Quersteg durchsetzt.

Gas/Luft-Verbundregler der hier behandelten Art sind häufig so ausgebildet, daß ihre Membranen in der Gebrauchslage horizontal angeordnet sind. In diesem Fall ist es besonders zweckmäßig, wenn das Widerlager im Abstand von der Unterseite der in Gebrauchslage unteren Membran angeordnet ist. Sie ist dann auf einen solchen Wert einzustellen, bei dem sie das Gewicht der Membrananordnungen, des Verhältnis-Einstellwerkes und der Ventilanordnung gerade aufhebt.

Weitere Einzelheiten und Ausgestaltungen der Erfindung ergeben sich aus der folgenden Beschreibung des in der Zeichnung dargestellten Ausführungsbeispieles. Die der Beschreibung und der Zeichnung zu entnehmenden Merkmale können bei anderen Ausführungsformen der Erfindung einzeln, für sich oder zu mehreren in beliebiger Kombination Anwendung finden. Es zeigen:

Fig. 1   einen Vertikalschnitt durch einen Gas/Luft-Verbundregler nach der Erfindung und

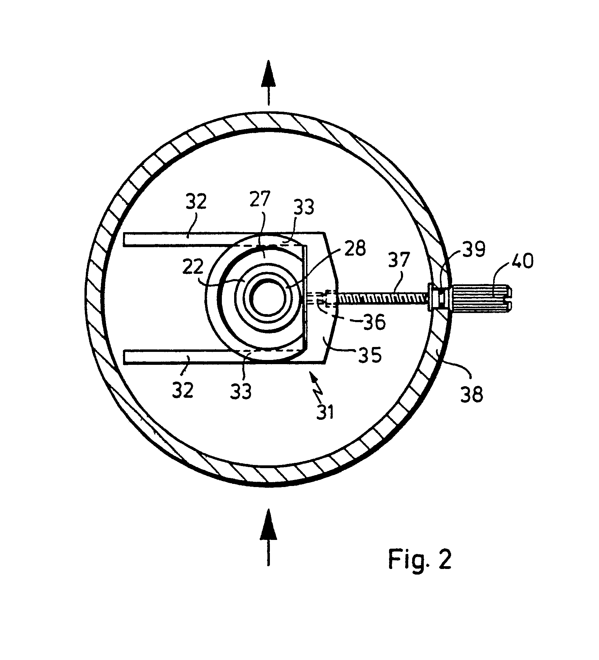

Fig. 2   einen Schnitt längs der Linie II-II durch den Gas/Luft-Verbundregler nach Fig. 1.

Bei dem in der Zeichnung dargestellten Gas/Luft-Verbundregler sind in einem Gehäuse 1 mit Abstand voneinander zwei Membranen 2 bzw. 3 eingespannt, die mit dem jeweils an ihre Außenseite angrenzenden Gehäuseteil eine Kammer 4 bzw. 5 begrenzen. Die Kammer 5 ist zum Anschluß einer Luftleitung bestimmt und demgemäß mit einem Anschlußstutzen 6 versehen. In entsprechender Weise ist auch die Kammer 4 mit einem in der Zeichnung nicht näher dargestellten Gaseinlaß versehen. In dem Raum zwischen den beiden Membranen 2 und 3 befindet sich ein Verhältnis-Einstellwerk, das aus einem über einen Stößel 7 mit der oberen Membran 2 gekoppelten, oberen Hebel 8, einem über einen Stößel 9 mit der unteren Membran 3 gekoppelten unteren Hebel 10 und einem Zwischenhebel 11 besteht, an dem sich der obere Hebel 8 über Rollen 12 und der untere Hebel 10 über Rollen 13 abstützt. Das Übersetzungsverhältnis des beschriebenen Hebelgetriebes bestimmt das Verhältnis der auf die Membranen 2 und 3 wirkenden Drücke, bei denen die von den Stößeln 7, 9 in das Hebelgetriebe eingeleiteten, einander entgegengesetzten Kräfte im Gleichgewicht sind. Dieses Verhältnis läßt sich durch Verschieben der Rollen 12 und 13, an denen sich die Hebel gegenseitig abstützen, in weiten Grenzen verschieben.

Zwischen dem Gehäuseboden 21 und der Unterseite der unteren Membran 3 befindet sich eine Schraubendruckfeder 22, die bestrebt ist, die Membrananordnung mit dem Verhältnis-Einstellwerk in einer oberen Stellung zu halten, in der ein an der Unterseite der unteren Membran 3 angebrachter Ventilstößel 23, der an seinem unteren Ende ein Verschlußstück 24 aufweist, ein Ventil geschlossen hält, das sich zwischen zwei im Boden 21 des Gehäuses angeordneten Leitungsanschlüssen 25, 26 befindet. Die Stärke der Schraubendruckfeder 22 muß so bemessen sein, daß sie bei herrschendem Kräftegleichgewicht das Ventil geschlossen hält, also genau das Gewicht der Membrananordnung und des Verhältnis-Einstellwerkes ausgleicht. Im Hinblick auf mögliche Fertigungstoleranzen, die einerseits das Gesamtgewicht der Membrananordnung und des Verhältnis-Einstellwerkes und andererseits die Spannkraft der Feder beeinflussen, besteht die Notwendigkeit, eine Möglichkeit zur genauen Einstellung der Federkraft zu schaffen.

Bei dem dargestellten Ausführungsbeispiel stützt sich die Schraubendruckfeder 22 mit ihrem unteren Ende an einem Widerlager 27 ab, das ebenso wie die Schraubendruckfeder 22 den Ventilstößel 23 ringförmig umgibt und auf einem den Stößel ebenfalls umgebenden, rohrförmigen Gehäuseansatz 28 in Axialrichtung der Feder verschiebbar gelagert ist.

Zur Verstellung des Widerlagers 27 in Achsrichtung der Schraubendruckfeder 22 dient ein Justierkeil 31, der U-förmig ausgebildet ist und mit seinen Schenkeln 32 den Gehäuseansatz 28 umgreift und zugleich Randabschnitte 33 des Widerlagers 27 untergreift. Die Schenkel 32 bilden an ihrer Oberseite keilförmige Schrägflächen 34, auf denen das Widerlager 27 im Bereich der Randabschnitte 33 mit entsprechend geneigten Schrägflächen aufsitzt. Der Quersteg 35 des U-förmigen Justierkeiles 31 weist in der Mitte eine Gewindebohrung 36 auf, in die eine Stellschraube 37 eingreift, die ihrerseits in einem Wandabschnitt 38 des Gehäuses 1 drehbar, aber axial unverschieblich gelagert ist. Die Stellschraube 37 durchdringt den Wandabschnitt 38 und ist gegenüber diesem Wandabschnitt mittels einer Dichtung 39 gasdicht abgedichtet. Am äußeren Ende der Stellschraube 37 befindet sich ein Rändelknopf 40 mit einem Querschlitz 41 zum Ansetzen eines Schraubenziehers.

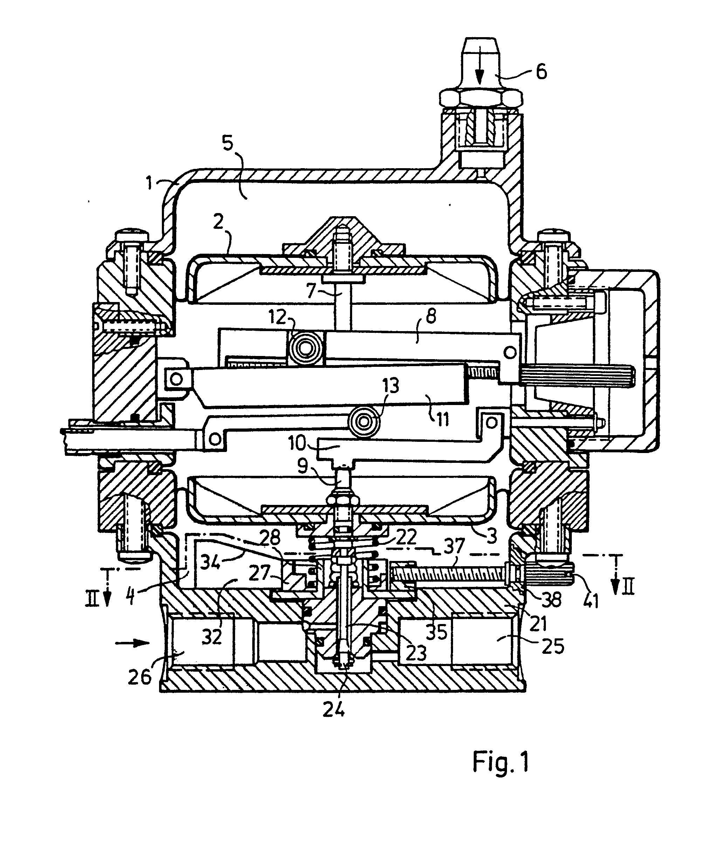

Es ist ohne weiteres ersichtlich, daß durch Drehen der Stellschraube 37 der U-förmige Justierkeil 31 quer oder radial zu dem Widerlager 27 verschiebbar ist, so daß das Widerlager je nach der Stellung des Justierkeiles an einer Stelle der Schenkel 32 anliegt, die von dem Boden 21 des Gehäuses einen mehr oder weniger großen Abstand hat. In Fig. 1 ist das Widerlager 27 in seiner tiefsten Stellung wiedergegeben, aus der es durch Verschieben des Justierkeiles 32 nach rechts durch Drehen der Stellschraube 37 angehoben werden kann. Durch die doppelte Untersetzung mittels Stellschraube 37 und Keilflächen 34 wird eine sehr feinfühlige Einstellung gewährleistet. Zugleich gewährleistet die großflächige Anlage des Widerlagers am Stellkeil einen äußerst sicheren Sitz, der eine selbstständige Veränderung der einmal gewählten Einstellung praktisch ausschließt. Zugleich ist ersichtlich, daß die Anordnung einen sehr einfachen Aufbau hat und zugleich eine bequeme Handhabung ermöglicht, weil der Rändelkopf 40 der Stellschraube an der Seite des Gehäuses stets gut zugänglich ist.

Es versteht sich, daß die Erfindung nicht auf das dargestellte Ausführungsbeispiel beschränkt ist, sondern Abweichungen davon möglich sind, ohne den Rahmen der Erfindung zu verlassen. Insbesondere ist die Erfindung unabhängig von der Art des zwischen den Membranen angeordneten Verhältnis-Einstellwerkes, das insbesondere in herkömmlicher Weise nur zwei durch ein Widerlager gekoppelte Hebel aufzuweisen braucht. Ferner ist die Erfindung auch bei solchen Gas/Luft-Verbundreglern anwendbar, bei denen beide Membranen durch gegeneinander wirkende Federn belastet sind, deren Kräfte dann aufeinander abgestimmt werden müssen. Zu diesem Zweck könnten auch gegebenenfalls zwei solche Federn an als Justierkeilen ausgebildeten Widerlagern abgestützt sein.

**Patentansprüche**

1. Gas/Luft-Verbundregler mit zwei Membran-Druckmessern, deren gegeneinander sowie gegen die Kraft einer Feder (22), die sich an einem in Wirkungsrichtung der Feder verstellbaren Widerlager (27) abstützt, wirkende Membranen über ein Verhältnis-Einstellwerk (7-13) mechanisch miteinander sowie mit dem Stößel (23) eines Ventiles verbunden sind, dadurch gekennzeichnet, daß das Widerlager (27) an der Schrägfläche (34) eines Justierkeiles (31) anliegt, der mittels einer Verstelleinrichtung quer zur Verstellrichtung des Widerlagers (27) verschiebbar ist.

2. Gas/Luft-Verbundregler nach Anspruch 1, dadurch gekennzeichnet, daß das Widerlager (27) mit einer der Schrägfläche (34) des Justierkeiles (31) angepaßten Schrägfläche am Justierkeil anliegt.

3. Gas/Luft-Verbundregler nach Anspruch 1 oder 2, dadurch gekennzeichnet, daß der Justierkeil (31) U-förmig ausgebildet ist und das Widerlager (27) mit Randabschnitten (33) auf den keilförmigen Schenkeln (32) des Justierkeiles aufsitzt.

4. Gas/Luft-Verbundregler nach einem der vorhergehenden Ansprüche, dadurch gekennzeichnet, daß die Verstelleinrichtung eine axial unverschiebbar gelagerte Stellschraube (37) umfaßt, die in eine Gewindebohrung (36) des Justierkeiles (31) eingreift.

5. Gas/Luft-Verbundregler nach Anspruch 4, dadurch gekennzeichnet, daß die Stellschraube (37) eine Gewindebohrung (36) im Quersteg (35) des U-förmigen Justierkeiles (31) durchsetzt.

6. Gas/Luft-Verbundregler nach einem der vorhergehenden Ansprüche, dadurch gekennzeichnet, daß das Widerlager (27) den sich an einer Membran (3) der zwei Membran-Druckmesser abstützenden Stößel (23) ringförmig umgibt.

7. Gas/Luft-Verbundregler nach Anspruch 6, dadurch gekennzeichnet, daß das Widerlager (27) auf einem den Stößel (23) umgebenden, rohrförmigen Gehäuseeinsatz (28) in dessen Achsrichtung verschiebbar gelagert ist.

8. Gas/Luft-Verbundregler nach einem der vorhergehenden Ansprüche, bei dem die Membranen in der Gebrauchslage horizontal angeordnet sind, dadurch gekennzeichnet, daß das Widerlager (27) im Abstand von der Unterseite der in Gebrauchslage unteren Membran (3) angeordnet ist.

**Claims**

1. Combined gas/air regulator with two diaphragm pressure gauges, whose diaphragms acting against one another and against the tension of a spring (22), which is supported on an abutment (27) adjustable in the spring action direction, and are mechanically connected together by means of a ratio setting means (7 - 13) and to the tappet (23) of a valve, characterized in that the abutment (27) engages on the sloping surface (34) of an adjusting wedge (31), which is displaceable by means of an adjusting device at right angles to the adjusting direction of the abutment (27).

2. Combined gas/air regulator according to claim 1, characterized in that the abutment (27) engages on the adjusting wedge with a sloping surface adapted to the sloping surface (34) of the adjusting wedge (31).

3. Combined gas/air regulator according to claims 1 or 2, characterized in that the adjusting wedge (31) is U-shaped and the abutment (27) rests with marginal portions (33) on the wedge-shaped legs (32) of the adjusting wedge.

4. Combined gas/air regulator according to one of the preceding claims, characterized in that the adjusting device comprises an axially non-displaceably mounted setscrew (37), which engages in a tapped hole (36) of the adjusting wedge (31).

5. Combined gas/air regulator according to claim 4, characterized in that the setscrew (37) traverses a tapped hole (36) in the transverse web (35) of the U-shaped adjusting wedge (31).

6. Combined gas/air regulator according to one of the preceding claims, characterized in that the abutment (27) surrounds in circular manner the tappet (23) supported on one diaphragm (3) of the two diaphragm pressure gauges.

7. Combined gas/air regulator according to claim 6, characterized in that the abutment (27) is mounted on a tubular casing insert (28) surrounding the tappet (23) so as to be displaceable in the axial direction thereof.

8. Combined gas/air regulator according to one of the preceding claims, in which the diaphragms are arranged horizontally in the position of use, characterized in that the abutment (27) is spaced from the underside of the lower diaphragm (3) in the position of use.

**Revendications**

1. Régulateur de rapport gaz/air comprenant deux instruments de mesure de pression à membrane, dont les membranes, qui agissent l'une contre l'autre ainsi qu'à l'encontre de la force d'un ressort (22), qui s'appuie sur une butée (27) réglable dans la direction d'action du ressort, sont reliées l'une à l'autre mécaniquement ainsi qu'au poussoir (23) d'une soupape, par l'intermédiaire d'un mecanisme de réglage de rapport (7-13), caractérisé en ce que la butée (27) est en appui sur la surface inclinée (34) d'un coin d'ajustement (31) qui peut être déplacé transversalement à la direction de réglage de la butée (27) au moyen d'un dispositif de réglage.

2. Régulateur de rapport gaz/air suivant la revendication 1, caractérisé en ce que la butée (27) est en appui sur le coin d'ajustement par une surface inclinée adaptée à la surface inclinée (34) du coin d'ajustement (31).

3. Régulateur de rapport gaz/air suivant l'une des revendications 1 et 2, caractérisé en ce que le coin d'ajustement (31) est réalisé sous la forme d'un U et en ce que la butée (27) repose, par des sections marginales (33), sur les ailes (32) en forme de coin du coin d'ajustement.

4. Régulateur de rapport gaz/air suivant l'une des revendications précédentes, caractérisé en ce que le dispositif de réglage comporte une vis de réglage (37) qui est supportée de manière à ne pas pouvoir être déplacée axialement et qui entre en prise dans un alésage taraudé (36) du coin d'ajustement (31).

5. Régulateur de rapport gaz/air suivant la revendication 4, caractérisé en ce que la vis de réglage (37) passe à travers un alésage taraudé (36) de l'âme transversale (35) du coin d'ajustement en forme de U (31).

6. Régulateur de rapport gaz/air suivant l'une des revendications précédentes, caractérisé en ce que la butée (27) entoure de manière annulaire le poussoir (23) qui s'appuie sur une membrane (3) des deux instruments de mesure de pression à membrane.

7. Régulateur de rapport gaz/air suivant la revendication 6, caractérisé en ce que la butée (27) est supportée de manière à pouvoir coulisser dans sa direction axiale sur un élément à insérer tubulaire (28) du boîtier qui entoure le poussoir (23).

8. Régulateur de rapport gaz/air suivant l'une des revendications précédentes, dans lequel les membranes sont agencées horizontalement dans la position d'emploi, caractérisé en ce que la butée (27) est agencée à distance de la face inférieure de la membrane (3) inférieure dans la position d'emploi.

Fig. 1

Fig. 2